(19) Europäisches Patentamt / European Patent Office / Office européen des brevets

(11) **EP 4 144 781 A1**

(12) **EUROPEAN PATENT APPLICATION**
published in accordance with Art. 153(4) EPC

(43) Date of publication:
**08.03.2023 Bulletin 2023/10**

(21) Application number: **20933771.6**

(22) Date of filing: **26.04.2020**

(51) International Patent Classification (IPC):
**C08G 63/08** (2006.01)    **C08G 63/78** (2006.01)
**C08G 63/85** (2006.01)

(52) Cooperative Patent Classification (CPC):
**C08G 63/08; C08G 63/78; C08G 63/85**

(86) International application number:
**PCT/CN2020/087017**

(87) International publication number:
**WO 2021/217299 (04.11.2021 Gazette 2021/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Wanhua Chemical (Sichuan) Co., Ltd.
Meishan, Sichuan 620031 (CN)**

• **Wanhua Chemical Group Co., Ltd.
Yantai, Shandong 264006 (CN)**

(72) Inventors:
• **SUN, Shuangyi
Yantai, Shandong 264006 (CN)**
• **QIAO, Yitao
Yantai, Shandong 264006 (CN)**

(74) Representative: **Pfenning, Meinig & Partner mbB
Patent- und Rechtsanwälte
Theresienhöhe 11a
80339 München (DE)**

(54) **PRODUCTION METHOD FOR PREPARING POLYLACTIC ACID BY MEANS OF RING-OPENING POLYMERIZATION METHOD, AND PREPOLYMER MIXTURE AND POLYLACTIC ACID**

(57)    The present invention relates to the technical field of the production of polylactic acid, and in particular to a production method for preparing polylactic acid by means of a ring-opening polymerization method, and a prepolymer mixture and the polylactic acid. The production method comprises: (1) enabling an initiator, a catalyst and a monomer I to be in contact in a production device to undergo a ring-opening polymerization reaction, so as to generate a prepolymer mixture containing a polylactic acid prepolymer; and (2) enabling the pre-polymer mixture and a monomer II to be in contact with one another to undergo a reaction, so as to generate a high molecular weight polylactic acid. The monomer I and the monomer II are the same or are different, and each independently comprises lactide. The production method provided by the present invention can reduce the fluctuation in the feeding quality of the initiator and the catalyst, and can improve the production stability during the production process.

**EP 4 144 781 A1**

**Description**

TECHNICAL FIELD

The present application belongs to the technical field of polylactic acid production, and especially, relates to a production method for preparing polylactic acid by a ring-opening polymerization method, and a prepolymer mixture and polylactic acid.

BACKGROUND

With the increasing attention to energy consumption and environmental protection, polylactic acid is receiving more and more attention. Polylactic acid (or polylactide, PLA for short) is a biodegradable polyester, which has important applications in textiles, food packaging, drug release, tissue engineering, etc., and its composite materials also have a wide application prospect in vehicle interiors, building materials, etc. Generally, PLA is mainly prepared by the direct polycondensation of lactic acid or ring-opening polymerization of lactide.

According to the polylactic acid resin and the method for producing the same as disclosed in the patent CN103649165A, compared with the ring-opening polymerization method, the direct polycondensation method has the problem that the prepared polylactic acid resin has a lower molecular weight. According to the patent US6187901B1, a polylactic acid product with a molar mass of 20000 to 500000 can be obtained by the ring-opening polymerization method. Therefore, the ring-opening polymerization method is usually used to obtain a high-molecular weight polylactic acid.

For the ring-opening polymerization method, lactide is used as a monomer, and an initiator and a catalyst usually need to be added. The initiator is usually an alcohol (represented by ROH below), and for example, the patent CN104892916A discloses a polymerization method with ethanol or lauryl alcohol as the initiator.

In the preparation of high-molecular weight polylactic acid by ring-opening polymerization, the number average molecular weight (Mn) of the target product PLA satisfies the following equation:

$$Mn = \frac{[MO] \times M_{mo}}{[ROH]} + M_{ROH'}$$

in which

[MO] is the mole number of the monomer, in which [MO] = mmo/Mmo, mmo is the mass of the monomer, and Mmo is the molar mass of the monomer;

[ROH] is the mole number of the initiator, in which [ROH] = mROH/MROH, mROH is the mass of the initiator, and MROH is the molecular weight of the initiator.

One of the features of the ring-opening polymerization method is that the molecular weight of products is extremely sensitive to the amount of the initiator ROH. The higher the target molecular weight, the more sensitive it is to the amount of ROH. For example, in a case where lactide (with a molecular weight of 144) is used as a monomer and ethanol (with a molecular weight of 46) is used as an initiator, and the total mass of the monomer and initiator is stipulated as 1000 kg, when the target molecular weight is 50000±5000, the required amount of the initiator ethanol is 0.836-1.022 kg, with an allowable error range of 0.186 kg; when the target molecular weight is 200000±5000, the required amount of the initiator ethanol is 0.224-0.236 kg, with an allowable error range of only 0.012 kg. After comparison, it is found that although the target molecular weight is only increased by 4 times, the allowable feeding error range of the former case is 15.5 times of the latter case.

Meanwhile, under the circumstance of using small-molecule alcohol as initiator to produce the high-molecular weight polylactic acid product, the feeding amount of small-molecule alcohol accounts for very little in the total mass of the material, and when the target molecular weight is 200000±5000, the proportion of the required ethanol mass is only 224-236 ppm in the total mass of the material.

In the actual production, it is necessary to consider the influence of conversion rate in addition to the influence of feeding formulation and weighing and feeding. The features of the ring-opening polymerization method determine that [MO] increases linearly with the conversion rate. Therefore, Mn of the product has a linear relationship with the conversion rate. In order to control the variation of product Mn to be less than or equal to 5%, it is necessary to control the variation of conversion rate to be less than or equal to 5% in the production. It is shown in experiments that the conversion rate under the same reaction time has little relation with the amount of initiator, but close relation with the amount of catalyst and the reaction temperature.

The commonly used catalysts for the ring-opening polymerization of lactide include acid catalysts, base catalysts, organometallic catalysts, and the like. Because the lactide ring-opening catalyzed by strong acid or strong base catalysts can lead to product racemization, the strong acid or strong base catalysts has little commercial value. Commercially reported catalysts are mainly organic base catalysts and organotin catalysts, especially the stannous octoate catalyst. Tin has a certain cytotoxicity and is difficult to remove from the product, and the amount and residue thereof must be strictly controlled. Generally, the residual Sn in the product needs to be controlled to be less than or equal to 50 ppm, and accordingly, the amount of stannous octoate catalyst should be at most 170 ppm. Meanwhile, one of the effective means to guarantee a conversion rate variation of less than or equal to 5% is to control the catalyst amount variation to be less than or equal to 5%.

Additionally, the conversion rate is closely related to the reaction temperature. With the increase of the reaction temperature, the reaction rate increases significantly, and the conversion rate increases under the same reaction time (in terms of a continuous reactor, it means the same feed rate). Therefore, in order to keep stable conversion rate, local hot spots need to be avoided in the reactor. The ring-opening polymerization of lactide is an exothermic reaction, and a uniform catalyst concentration in the reactor is required to avoid the local hot spots.

The conversion rate during PLA production is closely related to the amount and local concentration of catalyst. The performance of PLA products (such as viscosity, melt index, etc.) is closely related to the molecular weight, and the molecular weight is directly related to the conversion rate and the amount of the initiator. Therefore, the feed variation of the catalyst and initiator during polylactic acid production can easily lead to an unstable molecular weight of the product.

In the existing polylactic acid production method, the initiator and the catalyst are each used in a very low amount relative to the mass of the final product, and in actual production, this brings difficulties in weighing and feeding of the initiator and catalyst, and uniform dispersion of the initiator and catalyst during reacting process. Hence, it is necessary to develop a polymerization method which is more conducive to stable product production.

SUMMARY

Aiming at the defects of unstable production existing in the prior high-molecular weight polylactic acid production process, which is resulted from causes such as high accuracy requirements in weighing initiators and catalysts, large influence of feed mass variation on product quality, and difficulties in mixing due to small amounts of initiators and catalysts, an object of the present application is to provide a production method for preparing polylactic acid by a ring-opening polymerization method, and a prepolymer mixture and polylactic acid. This production method can reduce the feed variation of initiator and catalyst, and improve the production stability of high-molecular weight polylactic acid product during the production process (for example, the number average molecular weight of the prepared polylactic acid product).

In order to achieve the above object, the present application provides the technical solutions described below.

In an aspect, a production method for preparing polylactic acid by a ring-opening polymerization method is provided, including the following steps:

(1) contacting an initiator, a catalyst with a monomer I in a production device, and subjecting the same to a ring-opening polymerization reaction to generate a prepolymer mixture containing a polylactic acid prepolymer; and

(2) contacting the prepolymer mixture with a monomer II, and subjecting the same to a reaction to generate a high-molecular weight polylactic acid; preferably, the polylactic acid has a number average molecular weight of more than or equal to 45000; (for example, 50000, 100000, 200000, 300000, 400000, 450000);

the monomer I and the monomer II are identical or different, and each independently includes lactide. The "identical" herein means that those two include the same component(s) in the same proportion(s). The "different" herein means that those two include different components, or those two include the same component(s) but in different proportions.

In a preferred embodiment, the monomer I and the monomer II are identical in step (1) and step (2). Namely, the monomer I and the monomer II include the same component(s) in the same proportion(s); the prepared polylactic acid polymer is not a block copolymer.

According to the production method provided by the present application, in some embodiments, in step (1), when the monomer I is at 100% conversion, the polylactic acid prepolymer in the prepolymer mixture has a theoretical number average molecular weight of 1000-5000 (for example, 1500, 3000, 3500, 4000, 4500), preferably 2000-5000.

According to the production method provided by the present application, in some embodiments, in step (1), based on a total mass of the initiator and the monomer I being 100, a mass ratio of the initiator to the monomer I is 1.2:98.8 to 15.8:84.2 (for example, 1.5:98.5, 2:98, 5:95, 10:90, 12:88, 15:85).

In step (1), a feed mass ratio of the initiator can be defined as: a mass of the initiator/(a mass of the initiator + a mass of the monomer I). After calculation, that is, the feed mass ratio of the initiator is 1.2:100 to 15.8:100 (for example, 1.5:100, 2:100, 5:100, 10:100, 12:100, 15:100).

The feed mass ratio of the initiator in step (1) allows the theoretical number average molecular weight of the prepared polylactic acid prepolymer, when the monomer I is at 100% conversion, to reach the predetermined requirement. For example, the defined mass ratio of the initiator to the monomer I allows the theoretical number average molecular weight of the polylactic acid prepolymer in the prepolymer mixture, when the monomer I is at 100% conversion in step (1), to be 1000-5000.

In some embodiments, in step (2), based on a total mass of the prepolymer mixture and the monomer II being 100, a mass ratio of the prepolymer mixture to the monomer II is 0.5:99.5 to 10:90 (for example, 0.8:99.2, 1.5:98.5, 2:98, 5:95, 8:92), preferably 1:99 to 5:95.

A feed mass ratio of the prepolymer mixture can be defined as: a mass of the prepolymer mixture/(a mass of the prepolymer mixture + a mass of the monomer II). After calculation, that is, the feed mass ratio of the prepolymer mixture is 0.5:100 to 10:100 (for example, 0.8:100, 1.5:100, 2:100, 5:100, 8:100), preferably 1:100 to 5:100.

In some embodiments, the catalyst is selected from an organometallic compound and/or an organic base, preferably an organometallic compound.

In some preferred embodiments, the organometallic compound is selected from one or more of an organotin compound, an organoaluminum compound and an organozinc compound.

In some preferred embodiments, the organic base is an organic guanidine.

In some embodiments, in step (1), a ratio of a mass of the catalyst to a total mass of the initiator and the monomer I is 0.1:100 to 10:100 (for example, 0.5:100, 0.8:100, 1.5:100, 2:100, 5:100, 8:100).

In step (1), a feed mass ratio of the catalyst can be defined as: a mass of the catalyst/(a mass of the initiator + a mass of the monomer I). After calculation, that is, the feed mass ratio of the catalyst is 0.1:100 to 10:100.

The amount of the catalyst in step (1) is the total amount of the catalyst required in producing the final product, which means that no catalyst is need to be added in step (2). The catalyst added in step (1) still has catalytic activity in step (2).

The feed mass ratio of the catalyst in step (1) allows the catalyst to be controlled within a suitable content range in the prepared prepolymer mixture. For example, in the prepolymer mixture, the mass of the catalyst is 0.09-9.1% of the total mass of the polylactic acid prepolymer and unreacted monomer I. In some preferred embodiments, the catalyst is an organometallic compound, and in the prepolymer mixture, the content of the catalyst (calculated based on the corresponding metal) is 300-10000 ppm (for example, 500 ppm, 1000 ppm, 2000 ppm, 5000 ppm, 8000 ppm), more preferably 600-4000 ppm.

After the polymerization reaction is completed in step (2), the residual rate of the catalyst is required to be less than or equal to 0.12% in the obtained polylactic acid product system. The requirement for the catalyst content in the polylactic acid product system can be achieved by adjusting the material ratio in the reaction system of the prepolymer mixture and the monomer II in step (2).

In some embodiments, in the reaction system of the prepolymer mixture and the monomer II in step (2), the content of the catalyst is less than or equal to 0.12% (for example, the content of the catalyst is 0.1%, 0.08%, 0.05%, 0.01%), preferably less than or equal to 0.02%.

In some preferred embodiments, the catalyst is an organometallic compound, and in the reaction system of the prepolymer mixture and the monomer II in step (2), the content of the catalyst (calculated based on the corresponding metal) is 15-50 ppm (for example, 18 ppm, 25 ppm, 30 ppm, 35 ppm, 45 ppm), more preferably 20-40 ppm.

In some embodiments, for the monomer I and the monomer II, the lactide is selected from one or more of L-lactide, D-lactide and meso-lactide.

In some preferred embodiments, the monomer I and the monomer II each independently include a second monomer, and the second monomer is selected from a cyclic lactone and/or an epoxide, more preferably selected from a cyclic lactone, and further preferably selected from caprolactone and/or glycolide.

In some embodiments, the initiator is selected from one or more of hydroxyl-containing compounds, preferably selected from one or more of alcohol compounds. The alcohol compound herein can be one or more of a monohydric alcohol, a dihydric alcohol and a polyhydric alcohol; for example, isodecanol, dodecanol, 1,2-ethanediol, 1,3-propanediol, 1,4-butanediol, 1,5-pentanediol, 1,6-hexanediol, trimethylolpropane (TMP) or pentaerythritol.

In some embodiments, a residual rate of the monomer I is 2-20% (for example, 3%, 5%, 8%, 10%, 15%) in the reaction system of step (1). In this disclosure, the residual rate of the monomer I and the conversion rate can be converted to each other.

In some embodiments, in the reaction system of step (2), a conversion rate is 90-98% (for example, 92%, 95%), preferably 94-96%. The conversion rate herein can refer to the conversion rate of the monomer I and the monomer II.

The conversion rate is calculated as the ratio of the mass of monomers that have been converted to polymers to the total mass of the fed monomers. When the monomer I and the monomer II each includes only lactide, the conversion rate is also equal to the ratio of the mole number of monomers that have been converted to polymers to the total mole number of the fed monomers, because L-lactide, D-lactide and meso-lactide have the same molecular weight. The peak assigned to the monomer appears at different positions of the nuclear magnetic resonance spectra before and after polymerization, and the nuclear magnetic resonance spectra can be used for the calculation.

In some embodiments, step (1) is carried out at a reaction temperature of 150-220°C, preferably 170-200°C; step (2) is carried out at a reaction temperature of 170-220°C, preferably 175-200°C.

In some embodiments, step (1) is carried out in a production manner of a batch production, a semi-continuous production or a continuous production.

For example, step (1) adopts a batch production with one-time feed. The production device used in the batch production is known to those skilled in the art, which can be a tank reactor.

For example, step (1) adopts a semi-continuous production; in which the initiator and catalyst are added at one time, and the monomer I is continuously added; when the predetermined feed ratio and conversion rate are reached, the prepared prepolymer mixture in the system will be discharged at one time. The production device used in the semi-continuous production is known to those skilled in the art, which can be a tank reactor.

For example, step (1) adopts a continuous production, in which the initiator, the catalyst and the monomer I are added simultaneously into the reactor inlet of a production device according to the feed ratio, and when the predetermined conversion rate of the material is reached in the reactor, the prepared prepolymer mixture in the system will be continuously discharged from a reactor outlet. The production device used in the continuous production is known to those skilled in the art, which can be a tubular reactor.

In some embodiments, step (2) is carried out in a production manner of a batch production, and variation in the number average molecular weight of the prepared polylactic acid is less than or equal to 2%; or step (2) is carried out in a production manner of a semi-continuous production, and variation in the number average molecular weight of the prepared polylactic acid is less than or equal to 2%; or step (2) is carried out in a production manner of a continuous production, and variation in the number average molecular weight of the prepared polylactic acid is less than or equal to 5%, preferably less than or equal to 2%.

For example, step (2) adopts a batch production with one-time feed, and a same batch of prepolymer mixture is used to produce multiple batches of polylactic acid products.

For example, step (2) adopts a semi-continuous production; the prepolymer mixture is added into a reactor at one time, the monomer II is continuously added, and when the predetermined feed ratio and conversion rate are reached, the prepared high-molecular weight polylactic acid will be discharged at one time; a same batch of prepolymer mixture is used to produce multiple batches of polylactic acid products.

For example, step (2) adopts a continuous production; the prepolymer mixture and the monomer II are added simultaneously and continuously into the reactor inlet according to the feed ratio, and when the predetermined conversion rate is reached in the reactor, the high-molecular weight polylactic acid will be continuously discharged from a reactor outlet; variation in the number average molecular weight of the high-molecular weight polylactic acid prepared within 24 hours is less than or equal to 5%.

In a preferred embodiment, step (1) and step (2) are both carried out in a production manner of a continuous production; more preferably, a tubular reactor is used in step (1) and step (2).

In this disclosure, variation in the number average molecular weight (for example, less than or equal to 5%, or less than or equal to 2%) of the polylactic acid can refer to the absolute value of the variation range of the number average molecular weight of the prepared polylactic acid.

The key of the technical solution of the present application lies in: stepwise feed and polymerization of the monomer, stepwise amplification of the molecular weight of the prepared product, and stepwise dilution of the concentration of the catalyst. For example, there are two specific aspects: on the one hand, through stepwise amplification of the molecular weight of the prepared product, the gap between the initiator amount and the monomer amount in the formulation of production process is reduced (namely, the feed mass ratio of the initiator is increased), the operation difficulty in weighing and feeding of the initiator is reduced, and the molecular weight stability of the polylactic acid product in the production process is improved; on the other hand, through stepwise dilution of the concentration of the catalyst, the gap between the catalyst amount and other component amounts (monomer + initiator) in the formulation of production process is reduced (namely, the feed mass ratio of the catalyst is increased), the operation difficulty of the production in weighing and feeding of the catalyst is reduced, the conversion rate stability in the production process is improved, and furthermore, the molecular weight stability of the polylactic acid product is improved. Specific examples with calculation are used below for explanation.

For example, a high-molecular weight polylactic acid with a Mn of 100000±5000 (based on a number average molecular weight variation of less than or equal to 5%) is to be synthesized using lactide as the monomer, isodecanol with a molecular weight of 158 as the initiator, and 102 ppm of stannous octoate (30 ppm Sn) as the catalyst. A production process of one-step monomer polymerization reaction and a production process of stepwise monomer feed and polymerization are carried out, respectively.

(1) When the production process is carried out in a manner of one-step monomer direct polymerization, 998.42 kg of lactide, 1.580 kg of isodecanol, and 0.102 kg of stannous octoate (the usage amount of catalyst is very small, which is not counted in the product mass; the same below) are required to synthesize every 1000 kg of polylactic acid product. In the production process, the feed accuracy of isodecanol is required to be 1.505-1.663 kg, the feed mass ratio of isodecanol is 0.158%, and the feed mass ratio of stannous octoate is 0.01%. In production practice, it is found that the feed mass ratio of the initiator and the feed mass ratio of the catalyst are so small that it is difficult for the initiator and the catalyst to be accurately weighed and fed, and the feed amount can be easily affected by the feed method and feed operation and thus show variations; therefore, the production stability of the final polylactic acid product cannot be guaranteed.

(2) When the production process is carried out in a manner of stepwise feed and polymerization of the monomer, stepwise amplification of the molecular weight of the product, and stepwise dilution of the concentration of the catalyst, firstly, a polylactic acid prepolymer with a theoretical molecular weight of 2000 can be predetermined to be synthesized; secondly, after a prepolymer mixture containing the polylactic acid prepolymer is obtained, the molecular weight of the product is increased by 50 times to obtain a polylactic acid product with a molecular weight of 10000.

In the step of synthesizing the polylactic acid prepolymer with the theoretical molecular weight of 2000, 921 kg of lactide, 79.0 kg of isodecanol, and 5.12 kg of stannous octoate are required to synthesize every 1000 kg of polylactic acid prepolymer. The feed accuracy of isodecanol is required to be 75.24-83.16 kg, the feed mass ratio of isodecanol is 7.9%, and the feed mass ratio of stannous octoate is 0.5%. It can be seen that, compared with the production process of one-step monomer polymerization, the feed mass ratios of isodecanol and stannous octoate are increased by 50 times in the production process of polylactic acid prepolymer, so that the initiator and the catalyst are easy to weigh accurately and mix uniformly in the device. The allowable weighing error of isodecanol is increased from 0.158 kg to 7.9 kg, which greatly facilitates the weighing of the initiator. In the step of synthesizing the polylactic acid product with the molecular weight of 100000 from the polylactic acid prepolymer with the theoretical molecular weight of 2000, 20 kg of polylactic acid prepolymer and 980 kg of lactide are required to synthesize every 1000 kg of polylactic acid product, so that the feed mass ratio of the polylactic acid prepolymer is 2.0%, which also facilitates the weighing and feeding.

However, in production processes of stepwise amplification of the molecular weight of the prepared product and stepwise dilution of the concentration of the catalyst, the operation difficulty lies in how to determine a suitable prepolymer mixture.

The prepolymer mixture usually includes the catalyst, the unreacted monomer I and the polylactic acid prepolymer, and those three components all have certain effects on the prepolymer mixture system. The respective discussions are as follows.

i) The content of monomer I in the prepolymer mixture, which mainly depends on the conversion rate. The ring-opening polymerization of lactide is a reversible ring-opening polymerization, and thus monomers are unavoidable in the system when the reaction reaches equilibrium. The monomer content in the final system might slightly vary depending on the polymerization temperature. In view of the production economy, the conversion rate in step (1) can be controlled to be 80-98%, which means that the residual rate of the monomer I is about 2-20%. The residual monomer I will continue to participate in the polymerization reaction in step (2).

ii) The content of polylactic acid prepolymer in the prepolymer mixture, which also depends on the conversion rate, and the discussion can refer to the i) content above.

Additionally, the theoretical molecular weight of the polylactic acid prepolymer will bring various influences. A production process of stepwise amplification of the molecular weight of the product is adopted in the present application, the key point of which is to select a suitable amplification rate to facilitate the weighing and feeding of the raw material components in each step. The suitable amplification rate can be reflected as the theoretical molecular weight of the polylactic acid prepolymer obtained when the monomer I in step (1) is at 100% conversion. And selecting a suitable theoretical molecular weight of the polylactic acid prepolymer is benefical for various components in the production process formulation of step (1) and step (2) to weigh and feed easily and mix uniformly.

For example, when a molecular weight of the initiator is $M1$ and a theoretical number average molecular weight of the high-molecular weight polylactic acid obtained when the monomer I is at 100% conversion is $P$, $M2$ which is the most balanced theoretical molecular weight of polylactic acid prepolymer should be between $M1$ and $P$, and keep a balanced ratio with those two. Namely, $M1:M2=M2:P$; accordingly, the optimal value of the theoretical molecular weight $M2$ of the polylactic acid prepolymer can be calculated by the following equation:

$$M2 = \sqrt{M1 * P}$$ .

If the theoretical molecular weight M2 of the polylactic acid prepolymer is set according to the optimal value obtained by calculation, the weighing and feeding difficulties of the raw material components are equivalent in the operation of the two steps. When M2 is relatively large, the weighing and feeding difficulty of the raw material components in step (1) will be increased; when M2 is relatively small, the weighing and feeding difficulty of the raw material components in step (2) will be increased. However, in the production process, there are many factors affecting the selection of M2 value, resulting in M2 varying from the optimal value. Under the circumstance that the weighing and feeding accuracy of raw materials is not affected, the selection of M2 value can also vary from the optimal value.

In the production method of the present application, the theoretical number average molecular weight (P) of the high-molecular weight polylactic acid is more than or equal to 45000, and at most 500000 in general. According to the feasibility of production practice, it is necessary to consider the feed ratios of the initiator and the catalyst during the feeding in step (1) as well as the feed ratio of the prepolymer mixture during the feeding in step (2), to guarantee the weighing and feeding accuracy. With careful study of the applicant, it is found that the M2 value can satisfy "M1:M2≥1:100" by selecting a suitable value range of M2, and meanwhile, also ensure that M2:P is 0.5:100-10:100 by appropriately adjusting the M2 value selected.

In the reaction system, since the polylactic acid prepolymer and the residual monomer I will continue to react in step (2), there is no need to control the actual molecular weight of the produced polylactic acid prepolymer accurately. If necessary, the accurate theoretical number average molecular weight of the polylactic acid prepolymer can be obtained by calculation with a measured hydroxyl value of the prepolymer mixture (for example, the theoretical number average molecular weight of the polylactic acid prepolymer = 56.1*f*1000/hydroxyl value, where f represents functionality). By measuring the hydroxyl value of the prepolymer mixture in step (1), and according to the measured hydroxyl value (i.e., the theoretical molecular weight of the polylactic acid prepolymer can be determined by the measured hydroxyl value) and the target molecular weight of the predetermined final polylactic acid product, the mass ratio of the prepolymer mixture to the monomer II in step (2) can be determined. If necessary, step (2) can also adopt the method of stepwise monomer feeding and polymerization, especially when a high-molecular weight polylactic acid is required to be synthesized but limited by the devices, the dependency on high-accuracy weighing devices can be reduced significantly by performing multiple stepwise monomer polymerization.

iii) The content of catalyst in the prepolymer mixture, which can be determined by the catalyst content requirements in the final polylactic acid product and the mass ratio of the prepolymer mixture to the monomer in step (2).

In the production process, the catalyst content of the final polylactic acid product needs to meet the requirements. For example, taking an organotin compound catalyst as an example, the catalyst content calculated based on Sn can be 15-50 ppm. In view of that the catalyst concentration of the product might be increased after an optional monomer removal step carried out after the polymerization reaction is completed, the catalyst content calculated based on Sn can be adjusted to 20-40 ppm in the mixed system of the prepolymer mixture and monomer II in step (2), so that the catalyst content can still be less than or equal to 50 ppm after monomer removal.

After the mass ratio of the prepolymer mixture to the monomer II in the step (2) is determined, it can be used to calculate the content range of the catalyst in the prepolymer mixture, so as to improve the production economy. When different organometallic compounds or organic bases are used as catalysts, the respective amount of the catalysts can be adjusted according to the toxicity and catalytic efficiency of the catalysts.

iv) The composition of each component in the prepolymer mixture, and the viscosity of the prepolymer mixture also needs to be considered. An excessively high viscosity, in the first aspect, is not conducive to the mass transfer of the reaction, and is not conducive to the production control of step (1); in the second aspect, the excessively high viscosity is not conducive to the conveyance of the prepolymer mixture, and will increase energy consumption; in the third aspect, the excessively high viscosity is not conducive to the mixing of the prepolymer mixture and the monomers added in step (2). In view of the production convenience, the viscosity of the prepolymer mixture can be selected as 10-500 cp at 180°C.

By controlling the conversion rate in step (1) to be less than 80% and increasing the monomer content to be more than 20% in the prepolymer mixture, the theoretical number average molecular weight of the prepolymer mixture can be increased while the viscosity of the prepolymer mixture is maintained as 10-500 cp at 180°C, and the above manners are also beneficial to the production of step (2); however, the difficulty lies in the fact that the catalyst concentration of the system of step (1) is very high, and the reaction is extremely rapid, and it is more convenient to control the conversion rate in step (1) to be more than or equal to 80%.

In another aspect, a prepolymer mixture prepared by the production method described above is provided, which includes a catalyst, an unreacted monomer I and a polylactic acid prepolymer.

The prepolymer mixture provided by the present application, in some embodiments, has a viscosity of 10-500 cp (for example, 50 cp, 100 cp, 200 cp, 300 cp, 400 cp) at 180°C.

In some embodiments, in the prepolymer mixture, based on a total mass of the polylactic acid prepolymer and the unreacted monomer I being 100wt%, a content of the polylactic acid prepolymer is 80-98wt% (for example, 85wt%, 90wt%, 95wt%), and a content of the unreacted monomer I is 2-20wt% (for example, 3wt%, 6wt%, 12wt%, 18wt%).

In some embodiments, a mass of the catalyst is 0.09-9.1% (for example, 0.1%, 0.2%, 0.5%, 1%, 3%, 5%, 8%) of a total mass of the polylactic acid prepolymer and the unreacted monomer I.

In some embodiments, the catalyst is an organometallic compound, and in the prepolymer mixture, a content of the catalyst calculated based on the corresponding metal is 300-10000 ppm (for example, 500 ppm, 800 ppm, 1200 ppm, 2500 ppm, 5000 ppm, 8000 ppm), more preferably 600-4000 ppm.

In some embodiments, the polylactic acid prepolymer has a number average molecular weight of 800-5000 (for example, 1000, 2000, 3000, 4000).

In another aspect, a high-molecular weight polylactic acid prepared by the production method described above is provided.

Preferably, the polylactic acid has a number average molecular weight (Mn) of more than or equal to 45000 (for example, 50000, 80000, 120000, 150000, 200000, 300000, 400000, 450000), and more preferably, a number average molecular weight (Mn) of more than or equal to 60000;

Preferably, the polylactic acid has a polydispersity index (PDI) of 1.65-2.2 (for example, 1.7, 1.8, 2.0, 2.1).

In the present application, the prepolymer mixture prepared in step (1) contains an unreacted monomer I, and directly added with a monomer II without treatment. When the composition of monomer I and the composition of monomer II are different, the residual monomer I will interfere with the composition of monomer II. When the composition of monomer II includes the monomer I (for example, the monomer I is 100% of L-lactide and the monomer II is a mixture of 50% of L-lactide and 50% of D-lactide), the above-mentioned interference can be avoided by appropriately adjusting the composition of monomer II, so that a desired copolymer can be obtained. However, when the composition of monomer II does not include the monomer I absolutely (for example, the monomer I is 100% of L-lactide and the monomer II is 100% of D-lactide), and a block copolymer with high-degree phase separation is desired, the method as follows is required: firstly, performing polymerization of L-lactide; then performing catalyst removal and monomer removal; and then, adding a catalyst and D-lactide into the system for block polymerization. However, this method is different from the production method of the present application.

Therefore, in the present application, preferably, the polylactic acid is not a block copolymer.

In step (2), when the mass ratio of the prepolymer mixture to the monomer II is less than or equal to 2:98, the prepolymer mixture segments negligibly affect on the overall composition of the polylactic acid polymer in the target product, and under such circumstance, the final product can be considered to be polymerized exclusively from the monomer II, and it is a non-block product.

For producing polylactic acid with a number average molecular weight (Mn) of less than 45000, both the existing one-step ring-opening polymerization production method and the production method of the present application can effectively satisfy the production stability of the product. However, for producing polylactic acid with a number average molecular weight (Mn) of more than or equal to 45000, the production method of the present application can more effectively improve production stability, and can basically guarantee a small variation range in the number average molecular weight of the polylactic acid product, for example, a variation range of less than or equal to 2%.

The number average molecular weight of polylactic acid can be measured by GPC, in which dichloromethane is used as the mobile phase and polystyrene is used as the reference standard. The number average molecular weight of the high-molecular weight polylactic acid produced by the present application is generally inconsistent with the theoretical molecular weight calculated by formulation, and is generally smaller than the latter. This is mainly caused by two reasons: on the one hand, the number average molecular weight of the high-molecular weight polylactic acid is a relative value relative to the polystyrene reference standard, rather than an absolute value; on the other hand, residual water is unavoidable in the monomer raw material, and water can acts as an initiator to initiate the ring-opening polymerization of lactide, thereby increasing the amount of initiator actually participating in the reaction and reducing the molecular weight of polylactic acid.

In the production practice of polylactic acid, those skilled in the art should find the suitable relationship between the feed formulation and the molecular weight of the actual product by the production practice according to the raw material purity of monomer, the moisture content and other factors, rather than the easy calculation with the feed formulation.

Compared with the prior art, the technical solution of the present application has the following beneficial effects:

1. The operation difficulty in weighing and feeding of raw materials in the production process is reduced and the production stability (especially, stability in molecular weight of the polylactic acid) is improved by the production method that a prepolymer mixture is prepared first and then the molecular weight of the product is amplified, through a manner of stepwise monomer feed and polymerization. In a preferred embodiment, when a batch production is used to produce 5 batches of final products, the high-molecular weight polylactic acid product, prepared from a same batch of prepolymer mixture as well as a same raw material formulation, has a number average molecular

EP 4 144 781 A1

weight variation range of less than or equal to 2%; when continuous production is used, the high-molecular weight polylactic acid product, prepared from the same raw material formulation within 24 hours, has a number average molecular weight variation range of less than or equal to 5%;

2. It is important to control the composition of the prepared prepolymer mixture in the present application; a suitable prepolymer mixture can be determined by the content and the theoretical number average molecular weight of the polylactic acid prepolymer and the content of the unreacted monomer and catalyst in the prepolymer mixture, thereby realizing the production processes of stepwise amplification of the molecular weight of the prepared product and stepwise dilution of the concentration of the catalyst;

3. The present application also provides a method for producing polylactic acid products with different molecular weight from the same prepolymer mixture, which improves the production flexibility; by adjusting the mass ratio of the prepolymer mixture to the monomer, a plurality of polylactic acid products with different molecular weight can be flexibly produced from the same batch of prepolymer mixture.

DETAILED DESCRIPTION

In order to understand the technical features and contents of the present application thoroughly, the preferred embodiments of the present application will be described in more detail below. Although the preferred embodiments of the present application are described in examples, it should be understood that the present application may be achieved in various forms and should not be limited by the embodiments set forth herein.

<Source of raw materials>

L-lactide and D-lactide, purchased from Corbion, industrial grade;

trimethylolpropane (TMP), purchased from Aladdin Reagent Co. Ltd., reagent grade;

ethylene glycol, purchased from Aladdin Reagent Co. Ltd., reagent grade;

isodecanol, purchased from Beijing Innochem Science & Technology Co., Ltd., reagent grade;

1,4-butanediol, purchased from Marker, industrial grade;

1,6-hexanediol, purchased from Yuanli, was industrial grade.

The other raw materials and reagents were all purchased from Aladdin Reagent Co. Ltd. and were of reagent grade.

<Test method>

The conversion rate was measured by $^1$H NMR; then, the monomer content in the system was calculated according to the measured conversion rate and the feed mass ratio of raw materials in the reaction process.
The actual number average molecular weight of the polylactic acid prepolymer was calculated based on the feed ratio of raw materials and the conversion rate.
The metal (for example, Sn element) content in the catalyst was detected by ICP.
The viscosity of the prepolymer mixture was measured by a Cone/Plate Viscometer from Brookfield.
The number average molecular weight (Mn) and PDI (polydispersity index, used to describe the molecular weight distribution of the polymer) of the high-molecular weight polylactic acid were measured by GPC, in which dichloromethane was used as the mobile phase and polystyrene was used as the reference standard.
Unless otherwise specified, the moisture contents of monomers are all less than or equal to 50 ppm.
During the production process, all production devices need to be purged with nitrogen to remove the air in the devices before put into use.

Example 1

**Production of a prepolymer mixture:**

59.1 kg of 1,6-hexanediol, 941 kg of L-lactide and 6.8 kg of stannous octoate were added into a 1500 L stainless steel reactor for a ring-opening polymerization reaction. The ring-opening polymerization was performed at 180°C with stirring for 45 min, to obtain a prepolymer mixture A containing a polylactic acid prepolymer. When the monomer is at 100% conversion, the theoretical number average molecular weight of the polylactic acid prepolymer is 2000. In the reaction system, the conversion rate was 97.1%, and the content of the L-lactide monomer in the prepolymer mixture A was calculated to be 2.7wt%; the obtained polylactic acid prepolymer in the prepolymer mixture A had a number average molecular weight of 1945, a viscosity of 55 cp at 180°C, and an Sn content of 0.2% (2000 ppm).
In this production process, the feed mass ratio of 1,6-hexanediol was: 59.1 kg/(59.1 kg+941 kg)= 5.9:100. The feed mass ratio of stannous octoate was: 6.8 kg/(59.1 kg+941 kg)=0.68:100. Under such feed mass ratios of the raw materials, the initiator and the catalyst can be fed and weighed accurately.

**Production of a high-molecular weight polylactic acid:**

20.0 kg of the prepared prepolymer mixture A and 980 kg of L-lactide were added into a 1500 L stainless steel reactor for a reaction, and the reaction was performed at 180°C with stirring for 4 h, to obtain a high-molecular weight polylactic acid product. The prepared polylactic acid had a Mn of 68640 and a PDI of 1.71. In the system, the residual rate of L-lactide monomer was 4.5%, and the Sn content was 40 ppm.
In this production process, the feed mass ratio of the prepolymer mixture A was: 20.0 kg/(20.0 kg+ 980 kg)=2.0:100. Under such feed mass ratio of the raw material, the prepolymer mixture can be fed and weighed accurately.
Then, the production process of polylactic acid was performed 4 times using the prepolymer mixture A, and 5 batches of polylactic acid products were obtained in total. The results of the 5 batches of polylactic acid produced are shown in Table 1.

Table 1 Results of the 5 batches of polylactic acid produced

| Production Batch | Residual Rate of Monomer % | Mn of PLA | PDI |
|---|---|---|---|
| Batch 1 | 4.5 | 68640 | 1.71 |
| Batch 2 | 5.3 | 68295 | 1.72 |
| Batch 3 | 4.4 | 69051 | 1.71 |
| Batch 4 | 5.4 | 68229 | 1.72 |
| Batch 5 | 4.4 | 68774 | 1.71 |

The variation range of the number average molecular weight of the obtained polylactic acid was -0.5% ~ +0.7% of its average value.

Example 2

**Production of a prepolymer mixture:**

59.1 kg of 1,6-hexanediol, 941 kg of L-lactide and 6.8 kg of stannous octoate were added into a 1500 L stainless steel reactor for a ring-opening polymerization reaction. The ring-opening polymerization was performed at 180°C with stirring for 45 min, to obtain a prepolymer mixture A containing a polylactic acid prepolymer. When the monomer is at 100% conversion, the theoretical number average molecular weight of the polylactic acid prepolymer is 2000. In the reaction system, the conversion rate was 97.1% , and the content of the L-lactide monomer in the prepolymer mixture A was calculated to be 2.7wt%; the obtained polylactic acid prepolymer in the prepolymer mixture A had a number average molecular weight of 1945, a viscosity of 55 cp at 180°C, and an Sn content of 0.2% (2000 ppm).
In this production process, the feed mass ratio of 1,6-hexanediol was: 59.1 kg/(59.1 kg+941 kg)= 5.9:100. The feed mass ratio of stannous octoate was: 6.8 kg/(59.1 kg+941 kg)=0.68:100. Under such feed mass ratios of the raw materials, the initiator and the catalyst can be fed and weighed accurately.

**Production of a high-molecular weight polylactic acid:**

13.3 kg of the prepared prepolymer mixture A, 900.0 kg of L-lactide and 86.7 kg of D-lactide were added into a 1500 L stainless steel reactor for a reaction, and the reaction was performed at 170°C with stirring for 9 h, to obtain a high-molecular weight polylactic acid product. The prepared polylactic acid had a Mn of 97143 and a PDI of 1.93. In the system, the residual rate of the monomers was 4.5%, and the Sn content was 26.7 ppm.

In this production process, the feed mass ratio of the prepolymer mixture A was: 13.3 kg/(13.3 kg+ 986.7 kg)=1.3:100. Under such feed mass ratio of the raw material, the prepolymer mixture can be fed and weighed accurately.

Then, the production process of polylactic acid was performed 4 times using the prepolymer mixture A, and 5 batches of polylactic acid products were obtained in total. The results of the 5 batches of polylactic acid produced are shown in Table 2.

Table 2 Results of the 5 batches of polylactic acid produced

| Production Batch | Residual Rate of Monomer % | Mn of PLA | PDI |
|---|---|---|---|
| Batch 1 | 4.5 | 97143 | 1.93 |
| Batch 2 | 5.3 | 96770 | 1.94 |
| Batch 3 | 4.4 | 97992 | 1.91 |
| Batch 4 | 5.4 | 97554 | 1.93 |
| Batch 5 | 4.4 | 96991 | 1.94 |

The variation range of the number average molecular weight of the obtained polylactic acid was -0.5% ~ +0.7% of its average value.

**Example 3**

**Production of a prepolymer mixture:**

Reaction materials were continuously added into a first plug flow tubular reactor and the product was continuously collected, and each reaction material flow rate was as follows: the flow rate of trimethylolpropane (TMP) was 11.2 kg/h, the flow rate of L-lactide was 88.8 kg/h, and the flow rate of stannous octoate was 1.36 kg/h; reaction materials were subjected to a ring-opening polymerization reaction at 160°C for a reaction duration of 45 min, to obtain a prepolymer mixture B containing a polylactic acid prepolymer. When the monomer is at 100% conversion, the theoretical number average molecular weight of the polylactic acid prepolymer is 1200. In the reaction system, the conversion rate was 93.5%, and the content of the L-lactide monomer in the prepolymer mixture B was calculated to be 5.8wt%; the obtained polylactic acid prepolymer in the prepolymer mixture B had a number average molecular weight of 1131, a viscosity of 38 cp at 180°C, and an Sn content of 0.4% (4000 ppm). The prepared product was stored in a storage tank.

In the production process, the feed mass ratio of trimethylolpropane was: 11.2 kg/(11.2 kg+88.8 kg)=11.2:100. The feed mass ratio of stannous octoate was: 1.36 kg/(11.2 kg+88.8 kg)=1.36:100. Under such feed mass ratios of the raw materials, the initiator and the catalyst can be fed and weighed accurately.

**Production of a high-molecular weight polylactic acid:**

Reaction materials were continuously added into a second plug flow tubular reactor and the product was continuously collected, and each reaction material flow rate was as follows: the flow rate of the prepolymer mixture B was 1.0 kg/h and the flow rate of L-lactide was 99.0 kg/h; a polymerization reaction was performed at 200°C for a reaction duration of 4 h, to obtain a high-molecular weight polylactic acid product. The Sn content was 40 ppm in the system.

In this production process, the feed mass ratio of the prepolymer mixture B was: 1.0 kg/(1.0 kg+ 99.0 kg)=1.0:100. Under such feed mass ratio of the raw material, the prepolymer mixture can be fed and weighed accurately.

During the production process, a product sample was taken every 6 hours, and after sampling 5 times, 5 batches of polylactic acid products were obtained in total. The results of the 5 batches of polylactic acid produced are shown in Table 3.

Table 3 Results of the 5 batches of polylactic acid produced

| Production Batch | Residual Rate of Monomer % | Mn of PLA | PDI |
|---|---|---|---|
| Batch 1 | 4 | 80600 | 1.85 |
| Batch 2 | 4.9 | 77664 | 1.86 |
| Batch 3 | 3.9 | 83349 | 1.84 |
| Batch 4 | 4 | 79836 | 1.83 |
| Batch 5 | 4.1 | 81791 | 1.85 |

The variation range of the number average molecular weight of the obtained polylactic acid was -3.7% ~ +3.3% of its average value.

**Example 4**

**Production of a prepolymer mixture:**

Reaction materials were continuously added into a first plug flow tubular reactor and the product was continuously collected, and each reaction material flow rate was as follows: the flow rate of ethylene glycol was 6.2 kg/h, the flow rate of L-lactide was 93.8 kg/h, and the flow rate of stannous octoate was 2.73 kg/h; reaction materials were subjected to a ring-opening polymerization reaction at 150°C for a reaction duration of 45 min, to obtain a prepolymer mixture C containing a polylactic acid prepolymer. When the monomer is at 100% conversion, the theoretical number average molecular weight of the polylactic acid prepolymer is 1000. In the reaction system, the conversion rate was 97.0%, and the content of the L-lactide monomer in the prepolymer mixture C was calculated to be 2.8wt%; the obtained polylactic acid prepolymer in the prepolymer mixture C had a number average molecular weight of 972, a viscosity of 10 cp at 180°C, and an Sn content of 0.8% (8000 ppm). The prepared product was stored in a storage tank.

In the production process, the feed mass ratio of ethylene glycol was: 6.2 kg/(6.2 kg+93.8 kg)=6.2:100. The feed mass ratio of stannous octoate was: 2.73 kg/(6.2 kg+93.8 kg)=2.73:100. Under such feed mass ratios of the raw materials, the initiator and the catalyst can be fed and weighed accurately.

**Production of a high-molecular weight polylactic acid:**

Reaction materials were continuously added into a second plug flow tubular reactor and the product was continuously collected, and each reaction material flow rate was as follows: the flow rate of the prepolymer mixture C was 0.5 kg/h and the flow rate of L-lactide was 99.5 kg/h; a polymerization reaction was performed at 175°C for a reaction duration of 5.5 h, to obtain a high-molecular weight polylactic acid product. The Sn content was 40 ppm in the system.

In this production process, the feed mass ratio of the prepolymer mixture C was: 0.5 kg/(0.5 kg+ 99.5 kg)=0.5:100. Under such feed mass ratio of the raw material, the prepolymer mixture can be fed and weighed accurately.

During the production process, a product sample was taken every 6 hours, and after sampling 5 times, 5 batches of polylactic acid products were obtained in total. The results of the 5 batches of polylactic acid produced are shown in Table 4.

Table 4 Results of the 5 batches of polylactic acid produced

| Production Batch | Residual Rate of Monomer % | Mn of PLA | PDI |
|---|---|---|---|
| Batch 1 | 5 | 121178 | 2.05 |
| Batch 2 | 5.7 | 117379 | 2.06 |
| Batch 3 | 4.5 | 125536 | 2.04 |
| Batch 4 | 5.3 | 119080 | 2.05 |
| Batch 5 | 5.1 | 124340 | 2.06 |

The variation range of the number average molecular weight of the obtained polylactic acid was -3.4% ~ +3.3% of its average value.

**Example 5**

**Production of a prepolymer mixture:**

23.6 kg of 1,6-hexanediol, 898 kg of L-lactide, 78 kg of D-lactide and 6.8 kg of stannous octoate were added into a 1500 L stainless steel reactor for a ring-opening polymerization reaction; the ring-opening polymerization was performed at 220°C with stirring for 45 min, to obtain a prepolymer mixture D containing a polylactic acid prepolymer. When the monomer is at 100% conversion, the theoretical number average molecular weight of the polylactic acid prepolymer is 5000. In the reaction system, the conversion rate was 97.0%, and the content of the monomers in the prepolymer mixture D was calculated to be 2.9wt%; the obtained polylactic acid prepolymer in the prepolymer mixture D had a number average molecular weight of 4854, a viscosity of 218 cp at 180°C, and an Sn content of 0.2% (2000 ppm).

In this production process, the feed mass ratio of 1,6-hexanediol was: 23.6 kg/(23.6 kg+976 kg)= 2.36: 100. The feed mass ratio of stannous octoate was: 6.8 kg/(23.6 kg+976 kg)=0.68: 100. Under such feed mass ratios of the raw materials, the initiator and the catalyst can be fed and weighed accurately.

**Production of a high-molecular weight polylactic acid:**

20.0 kg of the prepared prepolymer mixture D, 902 kg of L-lactide and 78 kg of D-lactide were added into a 1500 L stainless steel reactor for a reaction, and the reaction was performed at 220°C with stirring for 3 h, to obtain a high-molecular weight polylactic acid. The prepared polylactic acid product had a Mn of 145731 and a PDI of 2.17. In the system, the residual rate of the lactide monomers was 3%, and the Sn content was 40 ppm.

In this production process, the feed mass ratio of the prepolymer mixture D was: 20.0 kg/(20.0 kg+ 980 kg)=2.0:100. Under such feed mass ratio of the raw material, the prepolymer mixture can be fed and weighed accurately.

Then, the production process of polylactic acid was performed 4 times using the prepolymer mixture A, and 5 batches of polylactic acid products were obtained in total. The results of the 5 batches of polylactic acid produced are shown in Table 5.

Table 5 Results of the 5 batches of polylactic acid produced

| Production Batch | Residual Rate of Monomer % | Mn of PLA | PDI |
|---|---|---|---|
| Batch 1 | 3 | 145731 | 2.17 |
| Batch 2 | 3.3 | 143399 | 2.18 |
| Batch 3 | 2.8 | 147943 | 2.17 |
| Batch 4 | 3.1 | 144207 | 2.16 |
| Batch 5 | 2.9 | 146200 | 2.17 |

The variation range of the number average molecular weight of the obtained polylactic acid was -1.4% ~ +1.7% of its average value.

**Example 6**

**Production of a prepolymer mixture:**

45.1 kg of 1,4-butanediol, 225 kg of L-lactide and 5.5 kg of stannous octoate were added into a 1500 L stainless steel reactor, heated to 170°C and stirred to perform a ring-opening polymerization reaction, then added with 730 kg of L-lactide within 30 min, and continued to react at 170°C for 50 min after completing the feeding; a prepolymer mixture E containing a polylactic acid prepolymer was obtained after the reaction was completed. When the monomer is at 100% conversion, the theoretical number average molecular weight of the polylactic acid prepolymer is 2000. In the reaction system, the conversion rate was 96.5%, and the content of the monomers in the prepolymer mixture E was calculated to be 3.3wt%; the obtained polylactic acid prepolymer in the prepolymer mixture E had a number average molecular weight of 1933, a viscosity of 22 cp at 180°C, and an Sn content of 0.16% (1600 ppm).

In this production process, the feed mass ratio of 1,4-butanediol was: 45.1 kg/(45.1 kg+955 kg)= 4.5:100. The feed mass ratio of stannous octoate was: 5.5 kg/(45.1 kg+955 kg)=0.55:100. Under such feed mass ratios of the raw materials, the initiator and the catalyst can be fed and weighed accurately.

**Production of a high-molecular weight polylactic acid:**

Reaction materials were continuously added into a plug flow tubular reactor and the product was continuously collected, and each reaction material flow rate was as follows: the flow rate of the prepolymer mixture E was 2.5 kg/h and the flow rate of L-lactide was 97.5 kg/h; a polymerization reaction was performed at 180°C for a reaction duration of 4 h, to obtain a high-molecular weight polylactic acid product. The Sn content was 40 ppm in the system.

In this production process, the feed mass ratio of the prepolymer mixture E was: 2.5 kg/(2.5 kg+ 97.5 kg)=2.5:100. Under such feed mass ratio of the raw material, the prepolymer mixture can be fed and weighed accurately.

During the production process, a product sample was taken every 6 hours, and after sampling 5 times, 5 batches of polylactic acid products were obtained in total. The results of the 5 batches of polylactic acid produced are shown in Table 6.

Table 6 Results of the 5 batches of polylactic acid produced

| Production Batch | Residual Rate of Monomer % | Mn of PLA | PDI |
|---|---|---|---|
| Batch 1 | 5.5 | 63817 | 1.68 |
| Batch 2 | 6.1 | 62987 | 1.69 |
| Batch 3 | 5.9 | 64774 | 1.68 |
| Batch 4 | 5.7 | 63366 | 1.68 |
| Batch 5 | 5.3 | 64015 | 1.69 |

The variation range of the number average molecular weight of the obtained polylactic acid was -1.3% ~ +1.5% of its average value.

**Example 7**

**Production of a prepolymer mixture:**

31.6 kg of isodecanol, 968 kg of L-lactide and 1.0 kg of stannous octoate were added into a 1500 L stainless steel reactor for a ring-opening polymerization reaction; the reaction was performed at 190°C with stirring for 60 min, to obtain a prepolymer mixture F containing a polylactic acid prepolymer. When the monomer is at 100% conversion, the theoretical number average molecular weight of the polylactic acid prepolymer is 5000. In the reaction system, the conversion rate was 97.5%, and the content of the monomer in the prepolymer mixture F was calculated to be 2.4wt%; the obtained polylactic acid prepolymer in the prepolymer mixture F had a number average molecular weight of 4879, a viscosity of 459 cp at 180°C, and an Sn content of 300 ppm.

In this production process, the feed mass ratio of isodecanol was: 31.6 kg/(31.6 kg+968 kg)= 3.16:100. The feed mass ratio of stannous octoate was: 1.0 kg/(31.6 kg+968 kg)=0.1:100. Under such feed mass ratios of the raw materials, the initiator and the catalyst can be fed and weighed accurately.

**Production of a high-molecular weight polylactic acid:**

Reaction materials were continuously added into a plug flow tubular reactor and the product was continuously collected, and each reaction material flow rate was as follows: the flow rate of the prepolymer mixture F was 10 kg/h and the flow rate of L-lactide was 90 kg/h; reaction materials were subjected to a polymerization reaction at 180°C for a reaction duration of 5 h, to obtain a high-molecular weight polylactic acid. The Sn content was 30 ppm in the system.

In this production process, the feed mass ratio of the prepolymer mixture F was: 10 kg/(10 kg+90 kg)=10:100. Under such feed mass ratio of the raw material, the prepolymer mixture can be fed and weighed accurately.

During the production process, a product sample was taken every 6 hours, and after sampling 5 times, 5 batches of polylactic acid were obtained in total. The results of the 5 batches of polylactic acid produced are shown in Table 7.

Table 7 Results of the 5 batches of polylactic acid produced

| Production Batch | Residual Rate of Monomer % | Mn of PLA | PDI |
|---|---|---|---|
| Batch 1 | 6.5 | 46004 | 1.65 |
| Batch 2 | 6.9 | 45573 | 1.66 |

(continued)

| Production Batch | Residual Rate of Monomer % | Mn of PLA | PDI |
|---|---|---|---|
| Batch 3 | 6.1 | 46420 | 1.65 |
| Batch 4 | 6.7 | 45871 | 1.65 |
| Batch 5 | 6.4 | 46114 | 1.66 |

The variation range of the number average molecular weight of the obtained polylactic acid was -0.9% ~ +0.9% of its average value.

**Comparative Example 1** (one-step polymerization)

**Production of a high-molecular weight polylactic acid:**

1.18 kg of 1,6-hexanediol, 999 kg of L-lactide and 0.14 kg of stannous octoate were added into a 1500 L stainless steel reactor for a ring-opening polymerization reaction, and the reaction was performed at 180°C with stirring for 4 h, to obtain a polylactic acid product. After the reaction was completed, the Sn content was 40 ppm in the system.

In the production process, the feed mass ratio of 1,6-hexanediol was: 1.18 kg/(1.18 kg+999 kg)= 0.118:100. The feed mass ratio of stannous octoate was: 0.14 kg/(1.18 kg+999 kg)=0.014:100. Under such feed mass ratios of the raw materials, the initiator and the catalyst cannot be controlled in terms of the feeding and weighing accuracy, and the raw materials will also be affected in uniformity during the mixing process.

The production process was performed 4 times, and 5 batches of polylactic acid products were obtained in total. The results of the 5 batches of polylactic acid produced are shown in Table 8.

Table 8 Results of the 5 batches of polylactic acid produced

| Production Batch | Residual Rate of Monomer % | Mn of PLA | PDI |
|---|---|---|---|
| Batch 1 | 4.7 | 68430 | 1.75 |
| Batch 2 | 4.3 | 62333 | 1.7 |
| Batch 3 | 4.8 | 73106 | 1.82 |
| Batch 4 | 4.4 | 65131 | 1.72 |
| Batch 5 | 5.3 | 69171 | 1.8 |

The variation range of the number average molecular weight of the obtained polylactic acid was -7.8% ~ +8.1% of its average value.

**Comparative Example 2** (one-step polymerization)

**Production of a high-molecular weight polylactic acid:**

Reaction materials were continuously added into a plug flow tubular reactor and the product was continuously collected, and each reaction material flow rate was as follows: the flow rate of trimethylolpropane (TMP) was 0.11 kg/h, the flow rate of L-lactide was 99.89 kg/h, and the flow rate of stannous octoate was 0.014 kg/h. Reaction materials were subjected to a ring-opening polymerization reaction at 200°C for a reaction duration of 3 h, to obtain a polylactic acid product. The Sn content was 40 ppm in the system.

In the production process, the feed mass ratio of trimethylolpropane was: 0.11 kg/(0.11 kg+99.89 kg)=0.11:100. The feed mass ratio of stannous octoate was: 0.014 kg/(0.11 kg+99.89 kg)= 0.014:100. Under such feed mass ratios of the raw materials, the initiator and the catalyst cannot be controlled in terms of the feeding and weighing accuracy, and the raw materials will also be affected in uniformity during the mixing process.

During the production process, a product sample was taken every 6 hours, and after sampling 5 times, 5 batches of polylactic acid products were obtained in total. The results of the 5 batches of polylactic acid produced are shown in Table 9.

Table 9 Results of the 5 batches of polylactic acid produced

| Production Batch | Residual Rate of Monomer % | Mn of PLA | PDI |
|---|---|---|---|
| Batch 1 | 4 | 80541 | 1.84 |
| Batch 2 | 4.8 | 69439 | 1.8 |
| Batch 3 | 3.7 | 88602 | 1.89 |
| Batch 4 | 4.1 | 77361 | 1.83 |
| Batch 5 | 4.2 | 80971 | 1.84 |

The variation range of the number average molecular weight of the obtained polylactic acid was -12.5% ~ +11.6% of its average value.

**Comparative Example** 3 (one-step polymerization)

**Production of a high-molecular weight polylactic acid:**

Reaction materials were continuously added into a plug flow tubular reactor and the product was continuously collected, and each reaction material flow rate was as follows: the flow rate of ethylene glycol was 0.03 kg/h, the flow rate of L-lactide was 99.97 kg/h, and the flow rate of stannous octoate was 0.014 kg/h. Reaction materials were subjected to a ring-opening polymerization reaction at 175°C for a reaction duration of 5.5 h, to obtain a polylactic acid product. The Sn content was 40 ppm in the system.

In the production process, the feed mass ratio of ethylene glycol was: 0.03 kg/(0.03 kg+99.97 kg)=0.03:100. The feed mass ratio of stannous octoate was: 0.014 kg/(0.03 kg+99.97 kg)= 0.014:100. Under such feed mass ratios of the raw materials, the initiator and the catalyst cannot be controlled in terms of the feeding and weighing accuracy, and the raw materials will also be affected in uniformity during the mixing process.

During the production process, a product sample was taken every 6 hours, and after sampling 5 times, 5 batches of polylactic acid products were obtained in total. The results of the 5 batches of polylactic acid produced are shown in Table 10.

Table 10 Results of the 5 batches of polylactic acid produced

| Production Batch | Residual Rate of Monomer % | Mn of PLA | PDI |
|---|---|---|---|
| Batch 1 | 5 | 118361 | 2.1 |
| Batch 2 | 7.2 | 90149 | 2.05 |
| Batch 3 | 4.6 | 136628 | 2.15 |
| Batch 4 | 6.3 | 109457 | 2.09 |
| Batch 5 | 5.7 | 125051 | 2.12 |

The variation range of the number average molecular weight of the obtained polylactic acid was -22.2% ~ +17.9% of its average value.

**Comparative Example 4** (one-step polymerization)

**Production of a high-molecular weight polylactic acid:**

0.47 kg of 1,6-hexanediol, 919.5 kg of L-lactide, 80 kg of D-lactide and 0.14 kg of stannous octoate were added into a 1500 L stainless steel reactor for a ring-opening polymerization reaction. The reaction was performed at 220°C with stirring for 3 h, to obtain a polylactic acid product. The Sn content was 40 ppm in the system.

In the production process, the feed mass ratio of 1,6-hexanediol was: 0.47 kg/(0.47 kg+999.5 kg)= 0.047:100. The feed mass ratio of stannous octoate was: 0.14 kg/(0.47 kg+999.5 kg)=0.014:100. Under such feed mass ratios of the raw materials, the initiator and the catalyst cannot be controlled in terms of the feeding and weighing accuracy, and the raw materials will also be affected in uniformity during the mixing process.

The production process was performed 4 times, and 5 batches of polylactic acid products were obtained in total. The results of the 5 batches of polylactic acid produced are shown in Table 11.

Table 11 Results of the 5 batches of polylactic acid produced

| Production Batch | Residual Rate of Monomer % | Mn of PLA | PDI |
|---|---|---|---|
| Batch 1 | 3.1 | 145021 | 2.17 |
| Batch 2 | 3.7 | 126448 | 2.12 |
| Batch 3 | 2.5 | 155490 | 2.21 |
| Batch 4 | 3.1 | 138741 | 2.15 |
| Batch 5 | 3 | 150992 | 2.2 |

The variation range of the number average molecular weight of the obtained polylactic acid was -11.8% ~ +8.5% of its average value.

**Comparative Example** 5 (one-step polymerization)

**Production of a high-molecular weight polylactic acid:**

Reaction materials were continuously added into a plug flow tubular reactor and the product was continuously collected, and each reaction material flow rate was as follows: the flow rate of 1,4-butanediol was 0.11 kg/h, the flow rate of L-lactide was 99.89 kg/h, and the flow rate of stannous octoate was 0.014 kg/h. Reaction materials were subjected to a ring-opening polymerization reaction at 180°C for a reaction duration of 4 h, to obtain a polylactic acid product. The Sn content was 40 ppm in the system.

In the production process, the feed mass ratio of 1,4-butanediol was: 0.11 kg/(0.11 kg+99.89 kg)=0.11:100. The feed mass ratio of stannous octoate was: 0.014 kg/(0.11 kg+99.89 kg)= 0.014:100. Under such feed mass ratios of the raw materials, the initiator and the catalyst cannot be controlled in terms of the feeding and weighing accuracy, and the raw materials will also be affected in uniformity during the mixing process.

During the production process, a product sample was taken every 6 hours, and after sampling 5 times, 5 batches of polylactic acid products were obtained in total. The results of the 5 batches of polylactic acid produced are shown in Table 12.

Table 12 Results of the 5 batches of polylactic acid produced

| Production Batch | Residual Rate of Monomer % | Mn of PLA | PDI |
|---|---|---|---|
| Batch 1 | 5.5 | 63635 | 1.71 |
| Batch 2 | 7.5 | 57007 | 1.67 |
| Batch 3 | 5 | 72470 | 1.81 |
| Batch 4 | 5.8 | 60092 | 1.69 |
| Batch 5 | 5.3 | 67749 | 1.76 |

The variation range of the number average molecular weight of the obtained polylactic acid was -11.2% ~ +12.9% of its average value.

**Comparative Example 6** (one-step polymerization)

**Production of a high-molecular weight polylactic acid:**

Reaction materials were continuously added into a plug flow tubular reactor and the product was continuously collected, and each reaction material flow rate was as follows: the flow rate of isodecanol was 0.32 kg/h, the flow rate of L-lactide was 99.68 kg/h, and the flow rate of stannous octoate was 0.010 kg/h. Reaction materials were subjected to a ring-opening polymerization reaction at 180°C for a reaction duration of 5 h, to obtain a polylactic acid product. The Sn content was 30 ppm in the system.

In the production process, the feed mass ratio of isodecanol was: 0.32 kg/(0.32 kg+99.68 kg)=0.32:100. The feed mass ratio of stannous octoate was: 0.010 kg/(0.32 kg+99.68 kg)= 0.010:100. Under such feed mass ratios of the raw materials, the initiator and the catalyst cannot be controlled in terms of the feeding and weighing accuracy, and the raw materials will also be affected in uniformity during the mixing process.

During the production process, a product sample was taken every 6 hours, and after sampling 5 times, 5 batches of polylactic acid products were obtained in total. The results of the 5 batches of polylactic acid produced are shown in Table 13.

Table 13 Results of the 5 batches of polylactic acid produced

| Production Batch | Residual Rate of Monomer % | Mn of PLA | PDI |
|---|---|---|---|
| Batch 1 | 6.5 | 46214 | 1.65 |
| Batch 2 | 8.9 | 42438 | 1.63 |
| Batch 3 | 5.5 | 50280 | 1.66 |
| Batch 4 | 6.6 | 43711 | 1.64 |
| Batch 5 | 6.4 | 48820 | 1.65 |

The variation range of the number average molecular weight of the obtained polylactic acid was -8.3% ~ +8.6% of its average value.

By comparing Comparative Example 1 with Example 1 and comparing Comparative Examples 2-6 with Examples 3-7, it can be found that the Examples have lower requirements on the weighing accuracy of raw materials in the production process, have more stable Mn with smaller variation ranges, and facilitate to the production practice. In the present application, the production process of two-step monomer feed and polymerization and stepwise molecular weight amplification is used, improving the production stability.

By comparing Comparative Example 1 with Example 1 and Example 2, it can be found that the production method of the present application can more easily and flexibly produce polylactic acid products with different molecular weight.

Various embodiments of the present application have been described above, and the above descriptions are not exhaustive but illustrative, and the present application is not limited by the disclosed embodiments. A plurality of modifications and variations are obvious to those skilled in the art without departing from the scope and spirit of various embodiments.

## Claims

1.   A production method for preparing polylactic acid by a ring-opening polymerization method, comprising the following steps:

    (1) contacting an initiator, a catalyst with a monomer I in a production device, and subjecting the same to a ring-opening polymerization reaction, to generate a prepolymer mixture containing a polylactic acid prepolymer; and
    (2) contacting the prepolymer mixture with a monomer II, and subjecting the same to a reaction, to generate a high-molecular weight polylactic acid; preferably, the polylactic acid has a number average molecular weight of more than or equal to 45000;

    the monomer I and the monomer II are identical or different, and each independently comprises lactide; preferably, the monomer I and the monomer II are identical in step (1) and step (2).

2.   The production method according to claim 1, wherein, in step (1), when the monomer I is at 100% conversion, the polylactic acid prepolymer in the prepolymer mixture has a theoretical number average molecular weight of 1000-5000, preferably 2000-5000.

3.   The production method according to claim 1 or 2, wherein, in step (1), a mass ratio of the initiator to the monomer I is 1.2:98.8 to 15.8:84.2, based on a total mass of the initiator and the monomer I being 100.

4.   The production method according to any one of claims 1 to 3, wherein, in step (2), a mass ratio of the prepolymer mixture to the monomer II is 0.5:99.5 to 10:90, preferably 1:99 to 5:95, based on a total mass of the prepolymer mixture and the monomer II being 100.

5. The production method according to any one of claims 1 to 4, wherein the catalyst is selected from an organometallic compound and/or an organic base, preferably selected from an organometallic compound;

preferably, the organometallic compound is selected from one or more of an organotin compound, an organoaluminum compound and an organozinc compound;
preferably, the organic base is an organic guanidine.

6. The production method according to any one of claims 1 to 5, wherein, in step (1), a ratio of a mass of the catalyst to a total mass of the initiator and the monomer I is 0.1:100 to 10:100;
preferably, the catalyst is an organometallic compound, and in the prepolymer mixture, a content of the catalyst (calculated based on the corresponding metal) is 300-10000 ppm, more preferably 600-4000 ppm.

7. The production method according to any one of claims 1 to 6, wherein, in the reaction system of the prepolymer mixture and the monomer II in step (2), a content of the catalyst is less than or equal to 0.12%, preferably less than or equal to 0.02%;
preferably, the catalyst is an organometallic compound, and in the reaction system of the prepolymer mixture and the monomer II in step (2), a content of the catalyst (calculated based on the corresponding metal) is 15-50 ppm, more preferably 20-40 ppm.

8. The production method according to any one of claims 1 to 7, wherein, for the monomer I and the monomer II, the lactide is selected from one or more of L-lactide, D-lactide and meso-lactide;
preferably, the monomer I and the monomer II each independently comprises a second monomer, and the second monomer is selected from a cyclic lactone and/or an epoxide, more preferably selected from a cyclic lactone, and further preferably selected from caprolactone and/or glycolide.

9. The production method according to any one of claims 1 to 8, wherein the initiator is selected from one or more of hydroxyl-containing compounds, preferably selected from one or more of alcohol compounds.

10. The production method according to any one of claims 1 to 9, wherein, in the reaction system of step (1), a residual rate of the monomer I is 2-20%; and/or
in the reaction system of step (2), a conversion rate is 90-98%, preferably 94-96%.

11. The production method according to any one of claims 1 to 10, wherein step (1) is carried out at a reaction temperature of 150-220°C, preferably 170-200°C; step (2) is carried out at a reaction temperature of 170-220°C, preferably 175-200°C.

12. The production method according to any one of claims 1 to 11, wherein step (1) is carried out in a manner of a batch production, a semi-continuous production or a continuous production; and/or

step (2) is carried out in a manner of a batch production, and variation in the number average molecular weight of the prepared polylactic acid is less than or equal to 2%; or step (2) is carried out in a manner of a semi-continuous production, and variation in the number average molecular weight of the prepared polylactic acid is less than or equal to 2%; or step (2) is carried out in a manner of a continuous production, and variation in the number average molecular weight of the prepared polylactic acid is less than or equal to 5%, preferably less than or equal to 2%;
preferably, step (1) and step (2) are both carried out in a manner of a continuous production; more preferably, a tubular reactor is used in step (1) and step (2).

13. A prepolymer mixture prepared by the production method according to any one of claims 1 to 12, comprising a catalyst, an unreacted monomer I and a polylactic acid prepolymer.

14. The prepolymer mixture according to claim 13, wherein

the prepolymer mixture has a viscosity of 10-500 cp at 180°C; and/or
in the prepolymer mixture, a content of the polylactic acid prepolymer is 80-98wt%, and a content of the unreacted monomer I is 2-20wt%, based on a total mass of the polylactic acid prepolymer and the unreacted monomer I being 100wt%; and/or
a mass of the catalyst is 0.09-9.1% of a total mass of the polylactic acid prepolymer and the unreacted monomer I; and/or
the catalyst is an organometallic compound, and in the prepolymer mixture, a content of the catalyst (calculated based on the corresponding metal) is 300-10000 ppm, more preferably 600-4000 ppm; and/or
the polylactic acid prepolymer has a number average molecular weight of 800-5000.

15. A high-molecular weight polylactic acid prepared by the production method according to any one of claims 1 to 12;

preferably, the polylactic acid has a number average molecular weight (Mn) of more than or equal to 45000, and more preferably, has a number average molecular weight (Mn) of more than or equal to 60000;
preferably, the polylactic acid has a polydispersity index (PDI) of 1.65-2.2;
preferably, the polylactic acid is not a block copolymer.

## INTERNATIONAL SEARCH REPORT

International application No.

**PCT/CN2020/087017**

| A. | CLASSIFICATION OF SUBJECT MATTER |
| --- | --- |

C08G 63/08(2006.01)i; C08G 63/78(2006.01)i; C08G 63/85(2006.01)i

According to International Patent Classification (IPC) or to both national classification and IPC

| B. | FIELDS SEARCHED |
| --- | --- |

Minimum documentation searched (classification system followed by classification symbols)

C08G, C08G63

Documentation searched other than minimum documentation to the extent that such documents are included in the fields searched

Electronic data base consulted during the international search (name of data base and, where practicable, search terms used)

CNPAT, WPI, EPODOC, CNKI: 聚丙交酯, 聚乳酸, 预聚, 丙交酯, 乳酸, 引发, 起始, 分子量, 开环, 催化剂, polylact+, prepoly+, lactide, lactic+, initiat+, ring 1w open, catalyst, molecular weight

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| X | CN 102459401 A (TOYO ENGINEERING CORP. et al.) 16 May 2012 (2012-05-16) embodiment 2 | 1-15 |
| X | CN 102924695 A (SHANGHAI KEYUAN BIO MATERIAL CO., LTD.) 13 February 2013 (2013-02-13) description, paragraphs [0005]-[0013] | 1-15 |
| X | CN 101522755 A (TEIJIN LTD; MUSASHINO KAGAKU KENKYUSHO) 02 September 2009 (2009-09-02) description, page 3 line 8 - page 8 line 20 | 1-15 |
| A | US 6291597 B1 (CARGILL, INCORPORATED) 18 September 2001 (2001-09-18) entire document | 1-15 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 January 2021** | **22 January 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

# EP 4 144 781 A1

International application No.

**PCT/CN2020/087017**

| Patent document cited in search report | | | Publication date (day/month/year) | Patent family member(s) | | | Publication date (day/month/year) |
|---|---|---|---|---|---|---|---|
| CN | 102459401 | A | 16 May 2012 | EP | 2444442 | A4 | 17 July 2013 |
| | | | | US | 8883955 | B2 | 11 November 2014 |
| | | | | KR | 20120037394 | A | 19 April 2012 |
| | | | | JP | WO2010147088 | A1 | 06 December 2012 |
| | | | | EP | 2444442 | A1 | 25 April 2012 |
| | | | | JP | 5277314 | B2 | 28 August 2013 |
| | | | | ES | 2556652 | T3 | 19 January 2016 |
| | | | | KR | 101292201 | B1 | 01 August 2013 |
| | | | | EP | 2444442 | B1 | 21 October 2015 |
| | | | | WO | 2010147088 | A1 | 23 December 2010 |
| | | | | CN | 102459401 | B | 08 April 2015 |
| | | | | US | 2012101248 | A1 | 26 April 2012 |
| CN | 102924695 | A | 13 February 2013 | None | | | |
| CN | 101522755 | A | 02 September 2009 | BR | PI0714816 | A2 | 21 May 2013 |
| | | | | JP | WO2008018474 | A1 | 24 December 2009 |
| | | | | MX | 2009001329 | A | 16 February 2009 |
| | | | | CA | 2660372 | A1 | 14 February 2008 |
| | | | | US | 2010004404 | A1 | 07 January 2010 |
| | | | | KR | 20090036112 | A | 13 April 2009 |
| | | | | WO | 2008018474 | A1 | 14 February 2008 |
| | | | | TW | 200813114 | A | 16 March 2008 |
| | | | | AU | 2007282489 | A1 | 14 February 2008 |
| | | | | EP | 2058351 | A1 | 13 May 2009 |
| US | 6291597 | B1 | 18 September 2001 | AU | 684303 | B2 | 11 December 1997 |
| | | | | US | 5998552 | A | 07 December 1999 |
| | | | | EP | 0711314 | A1 | 15 May 1996 |
| | | | | BR | 9407212 | A | 17 September 1996 |
| | | | | FI | 960433 | A | 30 January 1996 |
| | | | | JP | 3369185 | B2 | 20 January 2003 |
| | | | | JP | H09501456 | A | 10 February 1997 |
| | | | | WO | 9504097 | A1 | 09 February 1995 |
| | | | | US | 5798435 | A | 25 August 1998 |
| | | | | EP | 0711314 | B9 | 02 April 2003 |
| | | | | US | 5359026 | A | 25 October 1994 |
| | | | | DK | 0711314 | T5 | 18 August 2003 |
| | | | | DK | 0711314 | T3 | 10 February 2003 |
| | | | | DE | 69431483 | T2 | 31 July 2003 |
| | | | | AU | 7516294 | A | 28 February 1995 |
| | | | | CA | 2168041 | A1 | 09 February 1995 |
| | | | | EP | 0711314 | B1 | 02 October 2002 |
| | | | | FI | 960433 | A0 | 30 January 1996 |
| | | | | CA | 2168041 | C | 09 October 2007 |
| | | | | DE | 69431483 | D1 | 07 November 2002 |
| | | | | AT | 225378 | T | 15 October 2002 |
| | | | | FI | 112083 | B | 31 October 2003 |
| | | | | NZ | 271513 | A | 26 May 1997 |
| | | | | US | 5594095 | A | 14 January 1997 |
| | | | | ES | 2186689 | T3 | 16 May 2003 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103649165 A
- US 6187901 B1
- CN 104892916 A